**Europäisches Patentamt**

**European Patent Office**

**Office européen des brevets**

(11) Numéro de publication: **0 076 179**
**B1**

(12) # FASCICULE DE BREVET EUROPÉEN

(45) Date de publication du fascicule du brevet:
**13.08.86**

(51) Int. Cl.⁴: **B 64 G 1/36**

(21) Numéro de dépôt: **82401559.8**

(22) Date de dépôt: **19.08.82**

(54) **Procédé pour aligner l'axe de roulis d'un satellite avec une direction désirée.**

(30) Priorité: **28.09.81 FR 8118245**

(43) Date de publication de la demande:
**06.04.83 Bulletin 83/14**

(45) Mention de la délivrance du brevet:
**13.08.86 Bulletin 86/33**

(84) Etats contractants désignés:
**AT BE CH DE GB IT LI NL SE**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Hubert, Bernard, 7 avenue Howarth, F-06110 Le Cannet Rocheville (FR)**
Inventeur: **Blancke, Bernard, 26 avenue des Cigales, F-06110 Le Cannet Rocheville (FR)**

(74) Mandataire: **Bonnetat, Christian, Cabinet PROPI Conseils 23 rue de Léningrad, F-75008 Paris (FR)**

(56) Documents cité:
**DE-A-2 537 577**
**US-A-2 339 863**
**US-A-3 304 028**

**AIAA JOURNAL, vol. 1, no. 7, juillet 1963, pages 1575-1578; L.A. ULE: "Orientation of spinning satellites by radiation pressure".**
**JOURNAL OF SPACECRAFT, vol. 13, no. 12, décembre 1976, pages 765-768; K.C. PANDE: "Attitude control of spinning spacecraft by radiation pressure".**
**JOURNAL OF SPACECRAFT, mars 1970, pages 357-359; M.C. CROCKER: "Attitude control of a sun-pointing spinning spacecraft by means of solar radiation pressure".**
**JOURNAL OF GUIDANCE AND CONTROL, vol. 3, no. 2, mars-avril 1980, pages 132-139, New York (USA); B.W. STUCK: "Solar pressure three-axis**

(56) Documents cité: (suite)
**attitude control".**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé permettant d'aligner l'axe d'un satellite artificiel avec une direction quelconque désirée faisant un angle inférieur à 60 degrés avec la direction du soleil, ledit satellite comportant d'une part une pluralite de panneaux solaires repartis autour dudit axe, qui en position deployée de fonctionnement se trouvent dans un plan au moins approximativement orthogonal audit axe et d'autre part, des surfaces mobiles sensibles à la pression de radiation solaire et disposées à l'extrémité extérieure d'au moins certains desdits panneaux solaires et articulées chacune autour d'un axe orthogonal audit axe.

Elle s'applique tout particulièrement, quoique non exclusivement, aux satellites de mesure astronomique exigeant des conditions d'observation très stables et exemptes de variations perturbatrices.

On sait que, sur son orbite, un satellite est soumis à des couples perturbateurs dont les causes les plus importantes sont:
- la dissymétrie des effets de la pression de radiation solaire, due à l'incidence de l'axe du satellite par rapport au soleil et aux differences de réflectivité des éléments du satellite;
- l'influence du gradient de gravité terrestre;
- l'action du champ magnétique terrestre sur le moment magnétique résiduel du satellite;
- l'influence aérodynamique de l'environnement (pour les orbites basses).

Aussi, il est indispensable de prévoir des moyens pour contrôler l'attitude d'un satellite sur son orbite. On connait jusqu'à présent trois moyens à cet effet.

Deux de ces moyens mettent respectivement en oeuvre une roue à inertie ou des tuyères à gaz. Une roue à inertie ne produit pas de perturbations au niveau de ses paliers, lorsque sa suspension est magnétique; cependant, les commutations électromagnétiques des éléments moteurs de la roue produisent des excitations de faible amplitude, qui peuvent se répercuter sur les moyens d'observation portés par le satellite. Par ailleurs, l'utilisation de tuyères à gaz engendrant de temps à autre de brèves impulsions de correction d'attitude entraîne l'apparition d'excitation se répercutant sur la structure, les panneaux solaires et la partie sensible du satellite.

Aussi, lorsque l'on désire contrôler l'attitude d'un satellite avec le minimum de perturbations, on a recours au troisième moyen qui consiste à mettre à profit la pression de radiation de flux photonique solaire et donc à utiliser des surfaces orientables, liées au satellite et exposées à cette pression.

On connaît déjà de nombreuses formes de mise en oeuvre particulières de ce troisième moyen, tant passives qu'actives. On peut citer par exemple celles décrites dans les brevets FR-A-1 364 354 et FR-A-1 375 558, dans la revue AIAA Journal, Juillet 1963, Vol.1, N° 7, dans la revue J.SPACECRAFT, décembre 1976, vol. 13, N°12, dans la revue J.GUIDANCE AND CONTROL, 1980, Vol. 3, N°2, dans le brevet BE-A-874 523, dans la revue ACTA ASTRONAUTICA, 1980, Vol.7, ou bien encore dans les brevets US-A-3 304 028 et US-A-4 262 867.

Par ailleurs, le brevet US-A-3 145 948 décrit le moyen de faire tourner, sous l'action de la pression solaire, un satellite grâce à des panneaux solaires orientables, à la manière d'une hélice, ledit satellite étant stabilisé par d'autres moyens.

De plus, par le brevet US-A-3 304 028, on connaît déjà un procédé du type de celui décrit en introduction. En effet, dans ce brevet, afin de commander l'attitude d'un satellite selon trois de ses axes, on dispose, à l'extrémité de panneaux solaires sensiblement orthogonaux à l'axe du satellite devant faire un angle déterminé avec la direction du soleil, des gouvernes sur lesquelles est susceptible d'agir la pression de radiation solaire.

Les moyens décrits et conçus dans ce brevet pour commander les gouvernes s'appliquent spécifiquement à un satellite stabilisé selon trois axes et sont inadéquats pour stabiliser l'attitude d'un satellite tournant en permanence sur lui-même.

La présente invention a pour objet l'application particulière, à un satellite tournant sur lui-même, d'un procédé du type de celui décrit dans le brevet US-A-3 304 028. Plus spécifiquement, cette application concerne un satellite ayant une vitesse de roulis sensiblement constante, pour lui permettre d'effectuer des observations par defilement. Dans ce cas, il est necessaire d'asservir, par rapport à des repères solaires, stellaires ou inertiels, la direction de l'axe de roulis qui se trouve être, au moins sensiblement, orthogonal à un plan défini par les axes de visée d'au moins deux télescopes d'observation embarqués sur le satellite.

A cette fin, selon l'invention, le procédé du type décrit dans le préambule est caractérisé en ce que, ledit satellite tournant autour dudit axe, on commande cycliquement le braquage de chaque surface mobile par rapport au panneau solaire correspondant pendant la rotation du satellite autour dudit axe en fonction de la position angulaire du satellite autour de cet axe.

De préférence, afin, d'une part, de pouvoir maintenir à la valeur désirée ou faire évoluer progressivement suivant un programme l'inclinaison de l'axe de roulis par rapport à la direction du soleil, appelée ci-après incidence solaire, et, d'autre part, de corriger les erreurs d'alignement, dues aux causes mentionnées ci-dessus et détectées par des senseurs appropriés, la commande de braquage des gouvernes est constituée de trois composantes, dont la première correspond au moins sensiblement à l'équilibrage du satellite à l'incidence solaire désirée, la seconde est proportionnelle à l'erreur détectée dans le plan de l'incidence par ledit axe du satellite et la direction solaire et engendre un couple de tangage normal à ce plan, et la troisième est proportionnelle à l'erreur détectée dans un plan orthogonal au plan de l'incidence et produit un couple de lacet dans ce dernier plan.

Ainsi, selon l'invention, l'attitude du satellite est contrôlée suivant deux plans orthogonaux passant par l'axe de roulis.

On peut faire varier l'angle d'incidence solaire suivant un programme d'évolution.

De préférence, lorsque le procédé selon l'invention est appliqué à un satellite comportant, pour la commande de chaque surface mobile, un moteur ou actuateur électromagnétique dont le courant de commande est engendré à partir de signaux d'erreur en position et/ou de vitesse angulaire du satellite, délivrés par des détecteurs, à l'aide d'une chaîne de pilotage comprenant filtrage, logique de commande et amplificateur, il est caractérisé en ce qu'on associe à chaque moteur un détecteur de vitesse angulaire des surfaces mobiles pour introduire un amortissement dans la commande desdites surfaces mobiles.

Avantageusement, on articule chaque surface mobile sur le panneau solaire correspondant par l'intermédiaire d'au moins un lien de torsion. Dans ce cas, de préférence, on articule chaque surface mobile sur le panneau solaire correspondant par l'intermédiaire de deux liens de torsion alignés, chacun desdits liens étant ancré à l'une de ses extrémités à un bord extérieur dudit panneau solaire et à son autre extrémité à la partie mobile du moteur correspondant, ledit moteur se trouvant disposé en position médiane de l'articulation et sa partie fixe étant solidaire dudit panneau solaire et lesdits liens permettant d'éviter tout contact entre la partie fixe et la partie mobile.

Afin de permettre une bonne linéarité de commande, il peut être avantageux que, lorsqu'un moteur électromagnétique n'est pas alimenté, la surface mobile correspondante fasse avec le panneau solaire associé un angle de braquage non nul. Cet angle de braquage non nul peut être voisin de l'angle de braquage que prennent les gouvernes lorsqu'elles passent par le plan d'incidence solaire.

Les figures du dessin annexé feront bien comprendre comment l'invention peut être réalisée.

La figure 1 est une vue en perspective schématique d'un exemple de réalisation d'un satellite selon l'invention.

La figure 2 est une vue de dessus schématique du satellite de la figure 1.

La figure 3 est une coupe selon la ligne III-III de la figure 2.

Les figures 4 et 5 illustrent, en fonction de l'angle de braquage donné aux gouvernes, l'allure des couples de pression de radiation solaire fournis par celles-ci.

La figure 6 montre l'évolution de l'angle de braquage d'une gouverne en fonction de la position de celle-ci autour de l'axe de roulis.

La figure 7 illustre la commande du braquage des gouvernes lorsqu'une erreur d'alignement nécessite la création d'un couple correcteur ⁻ᵗM.

La figure 8 est le schéma synoptique d'un dispositif de commande des gouvernes.

La figure 9 illustre l'articulation et la commande d'une gouverne.

- La figure 10 montre, à plus grande échelle et partiellement en coupe, le moteur d'une gouverne.

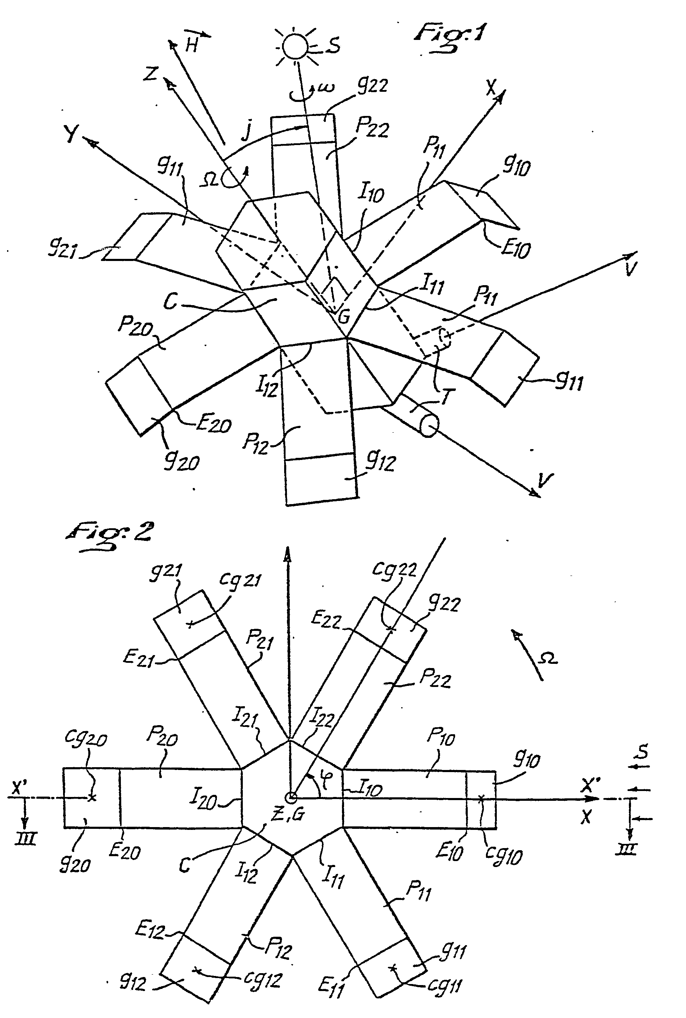

L'exemple de satellite de mesure astronomique selon l'invention, montré par les figures 1, 2 et 3, comporte essentiellement:

- un corps prismatique C allongé, à section polygonale régulière, ayant un axe longitudinal GZ, confondu avec l'axe de roulis;
- deux télescopes d'observation stellaires T, d'axes de visée V, disposés dans un plan orthogonal à l'axe GZ et portés par ledit corps C;
- des panneaux solaires photovoltaïques P10, P11, P12, P20, P21 et P22, identiques et régulièrement répartis autour de l'axe GZ. Chacun de ces panneaux est articulé, par l'intermédiaire d'une articulation I10, I11, I12, I20, I21 ou I22 correspondante, à une face du corps C. Ces articulations se trouvent dans un même plan orthogonal à l'axe GZ et, en position opérationnelle, les différents panneaux solaires se trouvent dans ce plan, formant une sorte d'étoile régulière. Pour le lancement et la mise sur orbite, les panneaux sont repliés le long du corps C.

Dans l'exemple de réalisation choisi, on a prévu six panneaux solaires deux à deux opposée P10 et P20-P11 et P21 - P12 et P22.

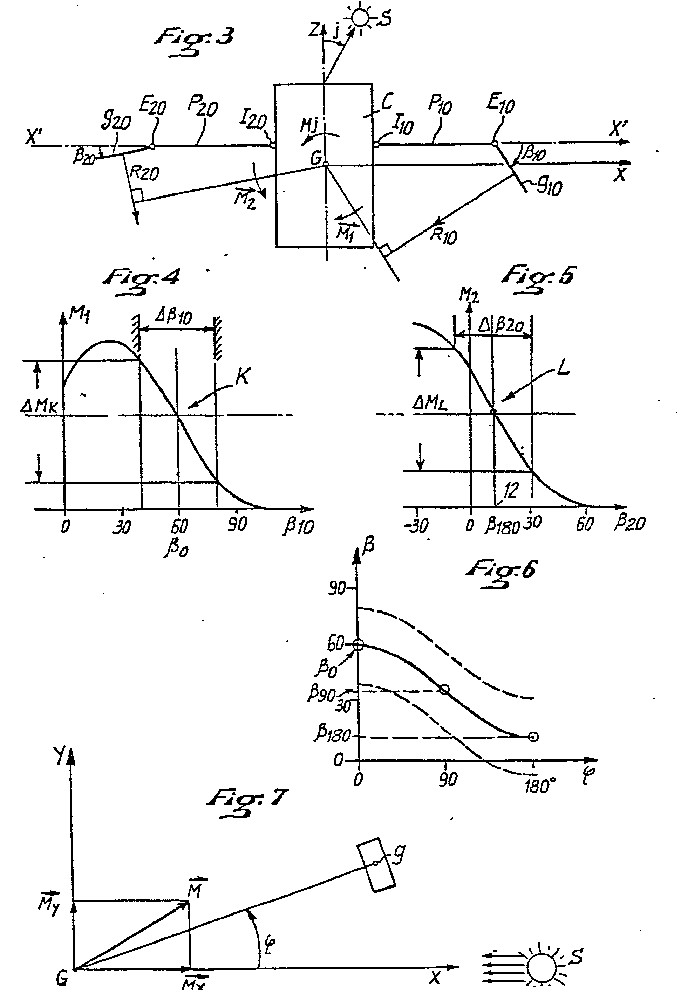

Comme l'illustre bien la figure 3, les articulations I10, I11, I12, I20, I21 et I22 sont excentrées par rapport au centre de gravité G, de sorte que le plan des panneaux P10, P11, P12, P20, P21 et P22 déployés ne passe pas par ledit centre de gravité G.

- des gouvernes identiques g10, g11, g12, g20, g21 et g22, respectivement articulées à l'extrémité des panneaux P10, P11, P12, P20, P21 et P22, au moyen d'articulations E10, E11, E12, E20, E21 et E22, équidistantes de l'axe GZ et tangentes à un même cercle centré sur cet axe. Le centre de gravité des différentes gouvernes a été respectivement désigné par cg10, cg11, cg12, cg20, cg21 et cg22.

L'ensemble du satellite se présente au rayonnement solaire sous une incidence sensiblement constante. Cette incidence est définie par l'angle i compris entre l'axe GZ et la direction GS, du soleil S. Dans le plan d'incidence solaire GZ, GS, on a représenté un axe GX, perpendiculaire à GZ. De plus, on a tracé sur les figures 1 et 2, un axe GY, perpendiculaire aux axes GZ et GX. On obtient ainsi un système de coordonnées GX, GY, GZ rapporté au centre de gravité G du satellite.

Eventuellement, on peut faire évoluer lentement l'angle d'incidence i, notamment pour tenir compte de la dégradation des cellules solaires des panneaux P10 à P22.

L'exploration stellaire, au moyen de télescopes T, peut être obtenue au moyen de trois rotations, par rapport à la voûte céleste, à savoir:
- une première rotation d'une période de 1 an correspondant à la rotation de la terre autour du soleil, puisque le satellite est en orbite autour de celle-ci et est orienté vers le soleil S avec une incidence j, au moins sensiblement constante;
- une seconde rotation autour de l'axe GS avec une vitesse ω correspondant à une période de l'ordre d'un mois, cette rotation correspondant à une précession de l'axe GZ du satellite autour de la direction du soleil; et
- une troisième rotation de roulis autour de l'axe GZ avec une vitesse Ω correspondant à une période de l'ordre de deux heures, cette rotation assurant le balayage et le passage successif des télescopes T dans la direction des mêmes étoiles.

La seconde et la troisième rotation engendrent le moment cinétique $\vec{H}$.

L'objet de la présente invention est de contrôler et d'asservir, avec une grande précision et des variations aussi faibles que possible, l'angle d'incidence solaire j et la vitesse de précession ω. En effet, la vitesse de balayage en roulis Ω n'a pas besoin d'être assurée avec une grande précision et peut être corrigée de temps à autre de façon connue au moyen de tuyères à gaz.

Pour atteindre cet objet, l'invention met en oeuvre des couples correcteurs de pression solaire autour des axes GX et GY, ces couples résultant de la superposition de commandes données aux gouvernes g10 à g22. La première de ces commandes correspond à l'obtention d'une incidence équilibrée j du satellite vis-à-vis du soleil, en l'absence de perturbations extérieures. Le principe de cette première commande est expliqué en regard des figures 3 à 6.

Sur les figures 2 et 3, on a représenté le satellite au moment où le centre de gravité cg10 de la gouverne g10 passait dans le plan GZ, GX. De plus, sur la figure 2, on a représenté l'angle Φ permettant de repérer la position des centres de gravité cg10 à cg22 autour de l'axe GZ, par rapport à l'axe X'-X' qui est, dans le plan des panneaux P10 à P22 déployés, la projection de l'axe GX. Cet angle Φ est tel que sa dérivée

$$\frac{d\,\phi}{dt}$$

par rapport au temps t est est tel que sa derivée égale à Ω.

Comme le montrent bien la figure 2 et surtout la figure 3, on donne aux gouvernes g10 à g22 des braquages respectifs $\beta_{10}$ à $\beta_{22}$, tous dans le même sens, en direction du centre de gravité G.

Si on se reporte à la figure 3, on voit que les braquages $\beta_{10}$ et $\beta_{20}$ des gouvernes g10 et g20 respectivement, produisent, en combinaison avec l'incidence j, des forces de pression solaire R10 et R20 qui induisent des moments $\vec{M}_1$ et $\vec{M}_2$ de signes inverses, par rapport à l'axe GY.

Chacun des autres couples g11-g21 et g12-g22 de gouvernes engendre également des couples comme les couples $\vec{M}_1$ et $\vec{M}_2$ la valeur de ces couples dépendant de l'incidence j et de la position angulaire Φ autour de l'axe GZ.

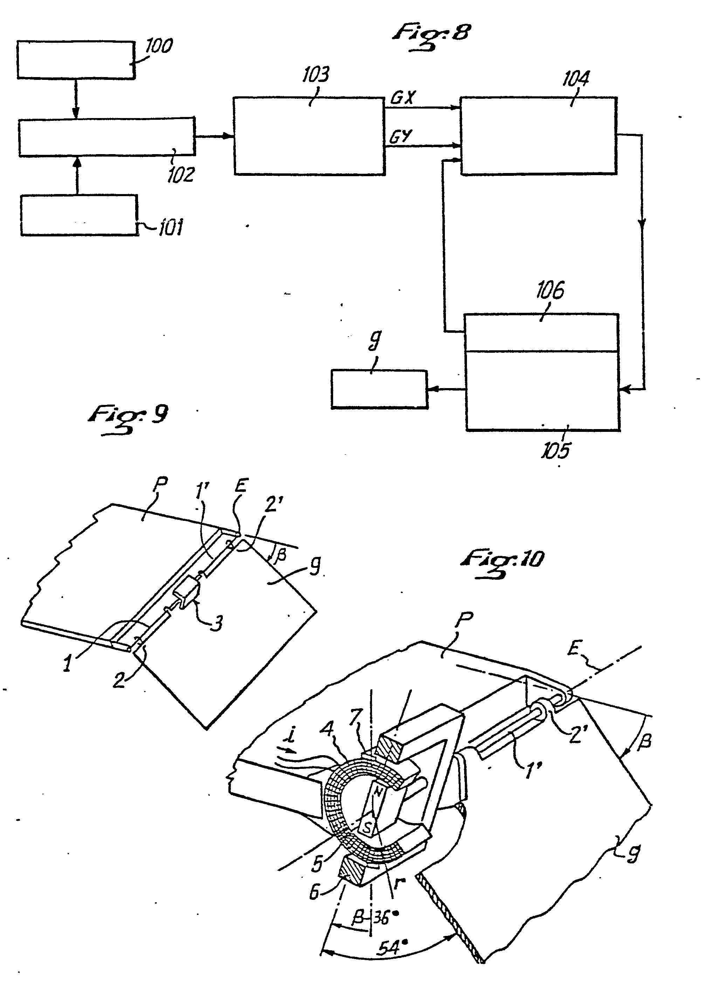

Pour une incidence j donnée (par exemple égale à 36°), les figures 4 et 5 montrent respectivement les courbes (K) et (L) de variation des couples $\vec{M}_1$ et $\vec{M}_2$ pour la gouverne g10 et pour la gouverne g20, respectivement en fonction des angles de braquage $\beta_{10}$ et $\beta_{20}$. Ainsi, la courbe (K) représente la variation du couple de pression de radiation solaire engendrée par une gouverne g10 à g22 pour un angle Φ = 0, tandis que la courbe (L) illustre la variation du couple de pression de radiation solaire engendrée par l'une de ces gouvernes pour Φ = 180°.

Ces courbes (K) et (L) montrent qu'il est possible de trouver pour chacune des gouvernes g10 et g20 une plage $\Delta M_K$ ou $\Delta M_L$, dans laquelle l'amplitude du moment $\vec{M}_1$ ou $\vec{M}_2$ varie de façon sensiblement linéaire pour une variation $\Delta\beta_{10}$ ou $\Delta\beta_{20}$ de l'ange de braquage $\beta_{10}$ ou $\beta_{20}$.

Si on suppose que le moment $\vec{M}j$ des forces de pression de radiation solaire exercé sur le corps C du satellite et sur les panneaux P10 à P22 est constamment nul autour de l'incidence d'équilibre, on voit sur les figures 4 et 5 qu'il est possible de trouver, au milieu de chaque plage $\Delta M_K$ et $\Delta M_L$, des valeurs d'angle de braquage $\beta_0$ ou $\beta_{180}$ respectivement, pour lesquelles les moments $\vec{M}_1$ et $\vec{M}_2$ sont de même grandeur. Ces moments étant de signes opposés, leurs effets s'annulent.

Ainsi, avec les hypothèses précédentes, la condition d'équilibre dans le plan d'incidence est que les angles de braquage $\beta_{10}$ et $\beta_{20}$ soient respectivement égaux à $\beta_0$ et $\beta_{180}$. Dans l'exemple montré ces valeurs sont respectivement égales à 60° et à 12° et, autour de ces valeurs, la plage de linéarité est de l'ordre de ± 15°, et même ± 20° avec environ 5 % de distorsion.

De plus, on peut voir, qu'une diminution de l'incidence j agit comme une augmentation de $\beta10$ et une diminution $\beta20$ c'est-à-dire entraîne une diminution du moment $\vec{M}_1$ et une augmentation du moment $\vec{M}_2$: le moment résultant tend donc à accroître l'incidence. On verrait de même qu'une augmentation d'incidence a l'effet inverse. Le système est donc statiquement stable.

Par ailleurs, une augmentation de $\beta_{10}$ et une diminution de $\beta_{20}$ à incidence constante, produisent un moment de même signe.

Une étude semblable à la précédente, effectuée dans le plan GZ, GY orthogonal au plan d'incidence montre que pour obtenir l'équilibre, il est nécessaire de donner à la gouverne passant à Φ = 90° un angle de braquage égal à une valeur $\beta_{90}$ et à la gouverne passant par Φ = 270°, un angle de braquage égal à une valeur $\beta_{270}$ avec $\beta_{90}$ = $\beta_{270}$. Dans l'exemple choisi ci-dessus, on aurait $\beta_{90}$- $\beta_{270}$ = 36°. Cette valeur est sensiblement indépendante de j.

Ainsi, pour obtenir l'équilibre statique du satellite, il faut faire variér de manière sinusoïdale l'angle de braquage de chacune des gouvernes en fonction de sa position angulaire autour de l'axe GZ au fur et à mesure que le satellite tourne autour de cet axe, de façon que:

pour $\Phi = 0°\ \beta = \beta_0$

$\Phi = 90°\ \beta = \beta_{90}$

$\Phi = 80°\ \beta = \beta_{180}$

$\Phi = 270°\ \beta = \beta_{90}$

$\Phi = 360°\ \beta = \beta_0$.

Le moment des forces de pression de radiation solaire exercé sur le corps C du satellite est perturbateur, mais il est minimisé par la configuration de révolution du satellite. Le moment résuitant $\vec{M}j$ peut varier en fonction de l'incidence j: il est nécessaire que ses valeurs extrêmes soient sensiblement inférieures à celles que peuvent fournir les gouvernes, de manière que celles-ci puissent encore fournir des moments de correction.

Ce critère intervient dans le dimensionnement des gouvernes.

La figure 6 illustre la variation de l'angle de braquage de chacune des gouvernes g10 à g22 en fonction de la position angulaire $\Phi$ de son centre de gravité.

Il peut être avantageux, pour obtenir une meilleure linéarité de commande, que les gouvernes, au repos de leurs actuateurs (dont un exemple est illustré par les figures 9 et 10), présentent un braquage de repos $\beta_r$ qui ne soit pas égal à 0. Par exemple, il est avantageux que $\beta_r$ soit choisi au moins approximativement égal à $\beta_{90}$. Ainsi, les commandes d'equilibre se font par un braquage commandé d'amplitude $\pm \Delta\beta$, avec $\Delta\beta = \beta_0 - \beta_{90} = \beta_{90} - \beta_{180}$. A cette variation $\Delta\beta$ s'ajoute une plage de $\pm 20°$ correspondant à la partie linéaire des caractéristiques (K), (L), etc... On pourra donc obtenir une amplitude de commande de $\pm (\Delta\beta + 20°)$ autour de $\beta_{90}$. Sur la figure 6, la zone de commande correspondante est délimitée par des lignes de tirets.

Grâce à un tel réglage initial ($\beta_r = \beta_{90}$), il est possible de mettre en oeuvre l'invention jusqu'à des valeurs de l'incidence solaire j voisines de 60°.

Au cours de la rotation du satellite autour de son axe GZ, on mesure son attitude.

L'attitude mesurée est déduite de la position détectée par des senseurs d'étoiles incorporés aux deux télescopes T du satellite. Lorsqu'un télescope T se trouve dans le plan de l'incidence solaire GX, GZ, il permet de mesurer l'attitude en incidence. Lorsqu'un télescope se trouve dans un plan perpendiculaire au plan GX, GZ, il permet de mesurer l'attitude de depointage latéral. Lorsqu'un télescope vise une étoile située entre les deux plans précédents, le senseur détecte une erreur qui peut se trouver dans une direction quelconque. Les deux composantes de cette erreur, suivant les directions GX et GY, sont obtenues au moyen d'un résolveur qui fait intervenir l'orientation en roulis du satellite dans la répartition des informations. Il suffit généralement de mettre en mémoire les coordonnées d'environ une étoile par minute de temps (soit environ 3° d'angle sur la sphère céleste) pour permettre un recalage très progressif du satellite.

L'erreur d'attitude résulte de la comparaison de l'attitude mesurée avec l'attitude nominale (qui correspond au programme d'exploration céleste), avec l'aide éventuelle d'une intégration de la vitesse angulaire, elle-même mesurée au moyen d'un gyromètre, ladite intégration pouvant être recalée périodiquement. Ce dernier moyen peut permettre d'obtenir un signal continu entre deux observations d'étoiles. Ce signal peut être également obtenu par un filtrage des erreurs détectées. Ce traitement des erreurs permet de fournir au dispositif de correction une information suffisamment continue pour qu'elle ne puisse pas être à l'origine de variations parasites.

Le traitement est effectué séparément sur les deux composantes de l'erreur.

Si à un instant donné une erreur d'alignement est détectée, elle nécessite la création d'un couple $\vec{M}$ situé dans le plan GX, GY (voir la figure 7). Comme montré, ce couple peut être décomposé suivant les directions GX et GY en $\vec{M}X$ et $\vec{M}Y$.

Pour créer un couple $\vec{M}Y$, les gouvernes les plus efficaces sont celles correspondant à ce moment à $\Phi = 0$ et $\Phi = 180$, alors que celles correspondant à $\Phi = 90$ et $\Phi = 270$ n'ont aucune efficacité de moment suivant l'axe GY. De plus, on a vu ci-dessus que pour créer un moment, il faut que deux gouvernes décalées de 180° aient des braquages inverses par rapport aux braquages d'équilibre.

Il s'ensuit qu'il sera commode, pour créer le coupe MY, de donner à chaque gouverne g en fonction de sa position un supplément de braquage de la forme:

$\delta\beta_1 = \beta_1 \cos \Phi$.

De même, pour créer un couple $\vec{M}Y$, on apportera un supplément de braquage:

$\delta\beta_2 = \beta. \sin \Phi$.

Les valeurs de braquage $\beta_1$ et $\beta_2$, respectivement relatives aux corrections suivant les axes GX et GY, sont des fonctions linéaires des erreurs détectées ou, ce qui revient au même, des couples demandes:

$$\beta_1 = \frac{1}{K1} |MY| \quad et \quad \beta_2 = \frac{1}{K2} |MX|$$

avec, par exemple: $\frac{1}{K1} = -2{,}4.10^4$ rad/Nm,

et $\dfrac{1}{K2} = + 2,9 . 10^4$ rad/Nm

Le calcul montre, d'une part, que les couplages entre les corrections effectuées suivant GX et GY sont faibles (< 10 % pour 20° de braquage) et, d'autre part, que les plages de linéarité des gouvernes sont importantes ($\pm$ 5 % sur 20° de braquage).

Avec des gouvernes de 1 m x 0,5 m et une réflectivité voisine de 1, la capacité de moment est, par exemple, $10^{-5}$ Nm pour 20° de braquage, soit plusieurs fois la capacité requise pour la manoeuvre du satellite, y compris l'équilibrage des couples pertubateurs.

La figure 8 montre le schéma synoptique du dispositif de pilotage des gouvernes g.

L'attitude nominale recherchée correspond au programme d'exploration céleste. Ce programme est établi de manière que le mouvement du satellite soit parfaitement continu. L'attitude nominale est définie à partir de coordonnées des étoiles-repères par rapport à la fenêtre de visée et est délivrée par un lecteur de programme 100.

Par ailleurs, des senseurs 101 (associés comme on l'a vu ci-dessus aux télescopes T) fournissent l'attitude mesurée du satellite. Cette attitude mesurée est comparée à l'attitude nominale dans un comparateur 102.

Après traitement, les signaux d'erreur provenant du comparateur 102 sont transmis à un filtre de pilotage 103 du type P.I.D. qui permet d'intégrer le résultat des corrections antérieures et de calculer les termes d'avance de phase nécessaires à l'amortissement du mouvement en cours. De cette manière, on peut assurer au pilotage une progressivité et une continuité permettant d'avoir des variations progressives même lors d'une acquisition ou après une éclipse.

Les sorties du filtre, relatives à chacun des axes GX et GY, représentent des couples de pilotage, qui tiennent compte des amortissements calculés en fonction de la vitesse de correction des erreurs et des écarts restant à corriger.

Ces couples de pilotage sont ensuite transformés, dans un traducteur 104 représentant les lois de braquage et associant la répartition en fonction de la direction Φ, en commandes de braquage pour chacune des gouvernes.

Ces commandes de braquage sont adressées aux moteurs de braquage 105 des gouvernes g. Associés à ces moteurs, sont disposés des détecteurs 106 de la vitesse angulaire de la gouverne correspondante. Cette information peut modifier la loi de braquage commandée à ladite gouverne par le traducteur 104.

Les braquages obtenus produisent, sous l'effet du rayonnement solaire, des moments moteurs, qui agissent sur le satellite.

Sous l'effet conjugué des moments moteurs, des moments dus à la pression solaire, des moments perturbateurs, on obtient une réponse dynamique du satellite en fonction de ses inerties.

Finalement, la réponse du satellite se traduit par une attitude réelle, qui est à l'origine de l'attitude mesurée au moyen des senseurs 101.

Sur les figures 9 et 10, on a représenté un exemple d'articulation d'une gouverne g en bout d'un panneau P, autour d'un axe E.

Cet axe E est matérialisé par deux câbles de torsion 1 et 1' alignés et tendus. Chacun de ces câbles est ancré, d'une part en un point 1a ou 1'a voisin du centre du bord interne de la gouverne, de part et d'autre du moteur 3 (correspondant à un moteur 105 de la figure 8), et d'autre part en un point 1b ou 1'b voisin du bord extrême du panneau P. Des paliers 2 et 2' solidaires des gouvernes g, sont traversés avec jeu par les câbles de torsion 1 et 1'. En configuration opérationnelle, il n'y a aucun contact avec les paliers, de manière à éliminer les frottements et éviter les problèmes de diffusion sous vide.

La commande des gouvernes g est assurée par un moteur 3 disposé en position médiane de la ligne d'articulation E. De préférence, ce moteur 3 est du type électromagnétique sans commutation, à bobine motrice unique. La figure 10 montre le détail dudit moteur. Il comporte une bobine 4 solidaire du panneau solaire P, qui reçoit directement un courant de commande i, sans contacts tournants, ni fils souples sujets à rupture. La partie mobile, solidaire de la gouverne g, comprend, au centre de la bobine, un aimant permanent 5 et, à l'extérieur des entrefers, un circuit magnétique en fer doux 6.

Etant donné que les câbles 1 et 1' de maintien de la gouverne ont une raideur de torsion λ, on voit qu'en l'absence de toute autre action, l'angle de braquage de la gouverne est proportionnel au courant i passant dans la bobine 4 car la torsion T est égale à:

$\vec{T} = \lambda\beta' = K' \vec{B} \wedge n \vec{i} l r$, avec

$\beta' = \beta - \beta_r,$

K': coefficient d'efficacité des spires,

B: champ magnétique dans l'entrefer,

n: nombre de spires de la bobine,

i: intensité du courant de commande,

l: largeur de l'aimant, > >

: rayon moyen d'action de la bobine.

Pour que cette équation donne correctement la position de la gouverne, il faut que le moment dû à la force de pression solaire autour de la charnière soit beaucoup plus petit que le couple de torsion des câbles de maintien de la gouverne.

Il faut remarquer que les spires qui constituent la bobine 4 sont disposées suivant une forme cylindrique de manière que le couple produit par un courant donné soit sensiblement constant, quelle que soit la valeur de l'angle de braquage. Il y a cependant une limite technologique et il est difficile d'envisager un braquage supérieur à $\pm$ 60° par rapport à la calage initial $\beta_r$ de la gouverne par rapport au moteur, ce qui par ailleurs exige moins de courant électrique.

Chaque moteur 3 peut être équipé d'un dispositif de mesure de la vitesse angulaire de braquage. Cette mesure est effectuée au moyen de la variation de champ produite dans une bobine fixe 7 (correspondant à un détecteur 106 de la figure 8) par le mouvement de l'aimant permanent du moteur, qui induit un courant proportionnel à la variation du champ.

Le bobinage 7 destiné à cette mesure est situé à l'extérieur de la bobine de commande du moteur et dans le plan de l'aimant lorsque i = 0.

Cette disposition est rendue possible par le fait que la bobine de commande étant sensiblement cylindrique, elle ne produit pratiquement aucun champ dans la zone de mesure.

En cas de besoin, le détecteur de vitesse peut être dissocié du moteur et faire partie d'un circuit magnétique indépendant; il peut être basé sur le même principe d'une bobine fixe et d'un aimant mobile.

## Revendications

1.- Procédé permettant d'aligner l'axe (GZ) d'un satellite artificiel (C) avec une direction quelconque désirée faisant un angle (j) inférieur à 60 degrés avec la direction du soleil, ledit satellite comportant d'une part une pluralité de panneaux solaires ($P_{10}$ à $P_{22}$) répartis autour dudit axe (GZ), qui en position déployée de fonctionnement se trouvent dans un plan au moins approximativement orthogonal audit axe (GZ) et d'autre part, des surfaces mobiles (g10 à g22) sensibles à la pression de radiation solaire et disposées à l'extrémité extérieure d'au moins certains desdits panneaux solaires ($P_{10}$ à $P_{22}$) et articulées chacune autour d'un axe ($E_{10}$ à $E_{22}$) orthogonal audit axe (GZ), caractérisé en ce que, ledit satellite tournant autour dudit axe GZ, on commande cycliquement le braquage de chaque surface mobile (g10 à g22) par rapport au panneau solaire correspondant pendant la rotation du satellite autour dudit axe (GZ) en fonction de la position angulaire du satellite autour de cet axe.

2.- Procédé selon la revendication 1, caractérisé en ce que la commande de braquage des gouvernes (g10 à g22) est constituée de trois composantes, dont la première correspond au moins sensiblement à l'équilibrage du satellite à l'incidence solaire (j) désirée, la seconde est proportionnelle à l'erreur détectée dans le plan de l'incidence défini par ledit axe (GZ) du satellite et la direction solaire

(GS) et engendre un couple de tangage normal à ce plan, et la troisième est proportionnelle à l'erreur détectée dans un plan orthogonal au plan de l'incidence et produit un couple de lacet dans ce dernier plan.

3.- Procédé selon l'une quelconque des revendications 1 ou 2, caractérisé en ce que l'on fait varier l'angle j d'incidence solaire suivant un programme d'évolution.

4.- Procédé selon l'une quelconque des revendications 1 à 3, appliqué à un satellite comportant, pour la commande de chaque surface mobile (g10 à g22) un moteur ou actuateur électromagnétique (3) dont le courant de commande est engendré à partir de signaux d'erreur en position et/ou de vitesse angulaire du satellite, délivrés par des détecteurs, à l'aide d'une chaîne (100 à 105) de pilotage comprenant filtrage, logique de commande et amplificateur, caractérisé en ce qu'on associe à chaque moteur (3) un détecteur (7) de vitesse angulaire des surfaces mobiles (g10 à g22) pour introduire un amortissement dans la commande desdites surfaces mobiles.

5.- Procédé selon la revendication 4, caractérisé en ce qu'on articule chaque surface mobile (g10 à g22) sur le panneau solaire ($P_{10}$ à $P_{22}$) correspondant par l'intermédiaire d'au moins un lien de torsion.

6.- Procédé selon la revendication 5, caractérisé en ce qu'on articule chaque surface mobile (g10 à g22) sur le panneau solaire($P_{10}$ à $P_{22}$) correspondant par l'intermédiaire de deux liens de torsion alignés, chacun desdits liens étant ancré à l'une de ses extrémités à un bord extérieur dudit panneau solaire et à son autre extrémité à la partie mobile du moteur correspondant, ledit moteur se trouvant dispose en position médiane de l'articulation (E10 à E22) et sa partie fixe étant solidaire dudit panneau solaire et lesdits liens permettant d'éviter tout contact entre la partie fixe et la partie mobile.

7.- Procédé selon l'une quelconque des revendications 4 à 6, caractérisé en ce que lorsqu'un moteur électromagnétique n'est pas alimenté, la surface mobile correspondante fait avec le panneau solaire associé un angle de braquage non nul.

8.- Procédé selon la revendication 7, caractérisé en ce que cet angle de braquage non nul est voisin de l'angle de braquage que prennent les surfaces mobiles lorsqu'elles passent par le plan d'incidence solaire.

## Patentansprüche

1. Verfahren zum Ausrichten der Achse (GZ) eines künstlichen Satelliten (C) mit jeder gewünschten Richtung, die zur Sonne einen Winkel (j) von weniger als 60° bildet, wobei der Satellit einerseits mehrere um dessen Achse (GZ) verteilte Sonnenzellenpanele ($P_{10}$ bis $P_{22}$), die in

ausgefahrener Betriebsstellung in einer Ebene liegen, die zumindest annähernd senkrecht zur Achse (GZ) steht, und andererseits bewegliche, auf Sonnenstrahlungsdruck ansprechende Oberflächen (g 10 bis g 22) aufweist, die am äußeren Ende zumindest bestimmter Sonnenpanele ($P_{10}$ bis $P_{22}$) angeordnet und jeweils um eine senkrecht zur Achse (GZ) stehende Achse ($E_{10}$ bis $E_{22}$) angelenkt sind, dadurch gekennzeichnet, daß bei dem sich um die Achse GZ drehenden Setelliten der Ausschlag jeder beweglichen Fläche (g10 bis g22) gegenüber dem entsprechenden Sonnenpanel während der Drehung des Satelliten um die Achse (GZ) in Abhängigkeit von der Winkeisteiiung des Satelliten um diese Achse zyklisch gesteuert wird.

2. Verfahren nach Anspruch 1, dadurch gekennzeichnet, daß die Ausschlagsteuerung der Steuerflächen (g 10 bis g 22) aus drei Teilkräften besteht, von denen die erste zumindest im wesentlichen der Gleichgewichts einstellung des Satelliten zum gewünschten Sonnenanstellwinkel (j) entspricht, die zweite dem in der Ebene des durch die Achse (GZ) des Satelliten und der Sonnenrichtung (GS) definierten Anstellung erfaßten Fehler proportional ist und ein zu dieser Ebene senkrecht verlaufendes Kipp- oder Längsmoment erzeugt, und von denen die dritte dem in einer zur Anstellungsebene orthogonal stehenden Ebene erfaßten Fehler proportional ist und ein Schlinger- oder Schwenkmoment in dieser letztgenannten Ebene erzeugt.

3. Verfahren nach einem der Ansprüche 1 oder 2, dadurch gekennzeichnet, daß man nach einem Entwicklungaprogramm den Sonnenanstellwinkel (j) variieren läßt.

4. Verfahren nach einem der Ansprüche 1 bis 3 in Anwendung auf einen Satelliten, der für die Steuerung jeder beweglichen Fläche (g 10 bis g 22) einen Motor oder einen elektromagnetischen Stellantrieb (3) aufweist, dessen Steuerstrom ausgehend von Fehlersignalen der Position und/oder Winkelgeschwindigkeit des Satelliten erzeugt wird, die mit Hilfe eines Lageregelungssystems (100 bis -105) bestehend aus Filterkreis, Steuerlogik und Verstärker von Detektoren geliefert werden, dadurch gekennzeichnet, daß jedem Motor (3) ein Detektor (7) der Winkelgeschwindigkeit der beweglichen Flächen (g 10 bis g 22) zugeordnet wird, um in die Steuerung der beweglichen Flächen eine Dämpfung einzuführen.

5. Verfahren nach Anspruch 4, dadurch gekennzeichnet, daß jede bewegliche Fläche (g 10 bia g 22) auf dem entsprechenden Sonnenpanel ($P_{10}$ bis $P_{22}$) mittels zumindest einer Dreh- oder Torsionsverbindung angelenkt ist.

6. Verfahren nach Anspruch 5, dadurch gekennzeichnet, daß jede bewegliche Fläche (g 10 bis g 22) auf dem entsprechenden Sonnenpanel ($P_{10}$ bis $P_{22}$) mittels zwei ausgerichteten Dreh- oder Torsionsverbindungen angelenkt ist, von denen jede mit einem seiner Enden an der Aussenkante des Sonnenpanels und mit dem anderen seiner Enden am beweglichen Teil des entsprechenden Motors verankert ist, der in Mittelstellung der Anlenkung ($E_{10}$ bis $E_{22}$) angeordnet und dessen feststehender Teil am Sonnenpanel liegt, wobei die Verbindungen jeglichen Kontakt zwischen dem feststehenden Teil und dem beweglichen Teil vermeiden können.

7. Verfahren nach einem der Ansprüche 4 bis 6, dadurch gekennzeichnet, daß, falls kein elektromagnetischer Motor gespeist wird, die entsprechende bewegliche Fläche mit dem zugeordneten Sonnenpanel einen Ausschlagwinkel bildet, der nicht Null ist.

8. Verfahren nach Anspruch 7, dadurch gekennzeichnet, daß dieser Ausschlagwinkel, der nicht Null ist, in der Nähe des Ausschlagwinkels liegt, den die beweglichen Flächen einnehmen, wenn sie durch die Ebene des Sonnenanstellwinkel gehen.

## Claims

1- Process for aligning the axis (GZ) of an artificial satellite (C) with any desired direction making an angle (j) less than 60 degrees with the direction of the sun, said satellite comprising, on the one hand, a plurality of solar panels (P10-P22) distributed about said axis (GZ), which, in extended position of operation, are located in a plane at least approximately orthogonal to said axis (GZ) and on the other hand, mobile surfaces (g10-g22) sensitive to the pressure of solar radiation and disposed at the outer end of at least certain of said solar panels (P10-P22) and each articulated about an axis (E10-E22) at right angles to said axis (GZ), characterized in that, said satellite rotating about said axis (GZ), one cyclically controls the deflection of each mobile surface (g10-g22) with respect to the corresponding solar panel during rotation of the satellite about said axis (GZ) in relationship with the angular position of the satellite about this axis.

2 - The process of Claim 1, characterized in that the control of the deflection of the control surfaces (g10-g22) is constituted by three components, of which the first corresponds at least substantially to the balance of the satellite at the desired solar incidence (j), the second is proportional to the error detected in the plane of the incidence defined by the roll axis (GZ) and the solar direction (GS) and generates a pitching moment normal to this plane, and the third is proportional to the error detected in a plane orthogonal to the plane of the incidence and produces a yaw moment in this latter plane.

3 - The process of one of Claims 1 or 2, characterized in that the angle of solar incidence (j) is varied according to a programme of development.

4 - The process of any of Claims 1 to 3, for a satellite comprising for controlling each mobile surface (g10-g22) an electromagnetic motor or actuator (3) whose control current is generated from signals indicating error of position and/or of angular velocity of the satellite, delivered by detectors, with the aid of a control chain (100-105) comprising filtering, control logic and amplifier,

characterized in that one associates with each motor (3) a detector (7) for detecting angular speed of the mobile surfaces (g10-g22) to introduce a damping in the control of said mobile surfaces.

5 - The process of Claim 4,

characterized in that each mobile surface (g10-g22) is articulated on the corresponding solar panel (P10-P22), via at least one torsion link.

6 - The process of Claim 5,

characterized in that each mobile surface (g10-g22) is articulated on the corresponding solar panel (P10-P22) via two aligned torsion links, each of said links being anchored at one of its ends on an outer edge of said solar panel and at its other end on the mobile part of the corresponding motor, said motor being disposed in median position on the articulation (E10-E22) and its fixed part being fast with said solar panel and said links, avoiding any contact between the fixed part and the mobile part.

7 - The process of any of Claims 4 to 6, characterized in that, when an electromagnetic motor is not supplied, the corresponding mobile surface makes with the solar panel associated therewith an angle of deflection which is not zero.

8 - The process of Claim 7,

characterized in that this non-zero angle of deflection is close to the angle of deflection taken by the mobile surfaces when they pass through the plane of solar incidence.

*Fig.1*

*Fig.2*

1

Fig. 3

Fig. 4

Fig. 5

Fig. 6

Fig. 7

Fig. 8

Fig. 9

Fig. 10